# EUROPEAN PATENT APPLICATION

(11) **EP 4 804 032 A1**
(43) Date of publication of application: **09.09.2026**
(21) Application number: 26162053.8
(22) Date of filing: 03.03.2026
(51) Int. Cl.: G06F 11/30

(54) **SYSTEMS AND METHODS FOR ADAPTIVE END-POINT MAPPING**

(30) Priority: 05.03.2025 US 202519071704
(71) Applicant: NetScout Systems, Inc., Westford, MA 01886 (US)
(72) Inventor: Curtin, John, Westford, Massachusetts, 01886 (US); Wang, Yu, Westford, Massachusetts, 01886 (US); Croll, Stephen, Westford, Massachusetts, 01886 (US); Jenney, Douglas, Westford, Massachusetts, 01886 (US); Bensley, Darren, Westford, Massachusetts, 01886 (US)
(74) Representative: Marks & Clerk LLP

(57) **Abstract**

Systems and methods for method for mapping dynamic endpoints of a containerized workload cluster to maintain service coherency are described. The method can include receiving metadata for a plurality of applications; generating, using an identifier and an address of the metadata, a data map correlating each of the plurality of applications with a unique identification token, the data map comprising an entry for each task instance or service of an application of the plurality of applications; and transmitting the data map to a monitoring device configured to enrich received packets with unique identification tokens of the endpoints at the application level, such as using the unique identification tokens to assign synthetic internet protocol (IP) addresses for enriched packets comprising an outer packet encapsulating each of a plurality of received packets.

## Description

### BACKGROUND

Containerization of computer resources can aid in providing a consistent and portable execution of applications across various environments. By orchestrating these containerized applications in a cluster or multi-cluster environment, deployments of compute resources can be managed at scale, to include load balancing, failover, or health monitoring. This health monitoring can be performed based on packet data transmitted to or from various ephemeral nodes of one or more clusters.

### BRIEF DESCRIPTION OF THE DRAWINGS

The accompanying drawings are not intended to be drawn to scale. Like reference numbers and designations in the various drawings indicate like elements. For purposes of clarity, not every component may be labeled in every drawing. In the drawings:
FIG. 1 is an illustration of an example data processing system for adaptive end point mapping, in accordance with an implementation;
FIG. 2 is an illustration of an example environment for adaptive end point mapping including a data processing system, in accordance with an implementation;
FIG. 3 is an illustration of an example data map depicting various contemporaneous processes of a multi-cluster environment, in accordance with an implementation;
FIG. 4 is an illustration of an example data map depicting temporally diverse mappings of a same application, in accordance with an implementation;
FIG. 5 is an example of temporal windows for various task instance endpoints, in accordance with an implementation; and
FIG. 6 is an example of a method for adaptive end point mapping, in accordance with an implementation.
FIG. 7A is a block diagram depicting an implementation of a network environment including a client device in communication with a server device.
FIG. 7B is a block diagram depicting a cloud computing environment including a cloud computing environment including a client device in communication with cloud service providers.
FIG. 7C is a block diagram depicting an implementation of a computing device that can be used in connection with the systems depicted in FIGS 1 and 2.

### DETAILED DESCRIPTION

In the following detailed description, reference is made to the accompanying drawings, which form a part hereof. In the drawings, similar symbols typically identify similar components, unless context dictates otherwise. The illustrative embodiments described in the detailed description, drawings, and claims are not meant to be limiting. Other embodiments may be utilized, and other changes may be made, without departing from the spirit or scope of the subject matter presented here. It will be readily understood that the aspects of the present disclosure, as generally described herein, and illustrated in the figures, can be arranged, substituted, combined, and designed in a wide variety of different configurations, all of which are explicitly contemplated and make part of this disclosure.

Monitoring systems can track processes for resource identification, debugging, anomaly detection, or performance optimizations, among other purposes by capturing communication between resources (i.e. applications, network functions, or any computer programs, running on physical devices, virtual devices, or in a cloud-based containerized environment). For example, monitoring systems can capture packets, layer 7 (L7) messages, or metadata of the communication to analyze the behavior of the resources regarding to the communication between the resources. Packets or L7 messages capturing provides the most information about the communication, however, obtaining information of the resources responsible for the communication (i.e. endpoints that send or receive the packets or messages) are not always straightforward, especially in a virtual or cloud-based environment. For example, monitoring systems can index various applications or other resources according to a workspace name, internet protocol (IP) address, or another identifier. However, in certain virtualized environments, resources may not maintain index coherency. For example, in dynamic or distributed systems, as may include Kubernetes-based applications, processes often migrate, scale, or restart automatically to meet workload demands. Applications may be accessed via services of applications, which may be independently defined, re-defined, or restarted. These result in ephemeral IP addresses or other identifiers that change frequently. This fluidity makes it difficult to associate a specific process with a stable identifier, especially in a multi-cluster or hybrid environment. Additionally, abstracted networking layers and service discovery mechanisms, while useful for scalability, can obscure visibility into the applications running on the underlying infrastructure of the clusters.

A data processing system can communicatively couple with a Kubernetes or other instance of a containerized workload cluster and receive metadata from the cluster. The metadata can include identifiers for various task instances implementing an application, such as pods or other endpoints. For example, the identifier may be received as a namespace, task instance name, or other unique identifier (UID). The metadata can include an address (e.g., an IP address) associated with the task instances of the application. The metadata can include identifiers, such as IP addresses, names, or other unique identifier (UID) for services defined of applications. The metadata can include an indication that a task instance or a service is associated with a particular application, such as a particular web server, database, content delivery network (CDN), virtual desktop infrastructure (VDI), or so forth. The metadata can include identifiers for various applications, such as names, or other unique identifiers (UID).

The data processing system can generate a data map correlating the identifiers and the addresses of task instances or services with an application. Accordingly, upon receipt of packets with endpoints of the task instances (e.g., Kubernetes pods), the data map may be used to correlate a task instance identifier, such as an IP address of a task instance in the packet, with an application.

In some embodiments, the Kubernetes or other containerized workload cluster can dynamically adjust task instances (e.g., pods) associated with an application. For example, the cluster can commission or decommission pods or worker nodes to correspond to dynamic load utilization, failover, or other cluster management operations. In some cases, the cluster can commission or decommission an application resulting in changes of identifiers of the application along with changes of identifiers of task instances of the application. Accordingly, the data processing system can indicate temporal windows for a validity of various mappings. For example, a first temporal window can associate four task instances with an application, as may be implemented by same or different worker nodes. A subsequent second temporal window, as may correspond to high utilization of the four task instances, can associate five task instances. The five task instances may (but need not) include any of the previous four task instances. For example, the cluster can maintain the previous four instances and spin up an additional instance, or can migrate the task instances to other worker nodes resulting in five new instances. A subsequent third temporal window, as may correspond to a failover event, can associate five new task instances with the same application.

In some embodiments, certain identifiers which are unique within a cluster may not be unique across a multiple cluster environment (e.g., private IP addresses or names). Accordingly, the data processing system can further de-conflate any identifiers between clusters, such that the data map can include an environmentally unique identifier for a multi-cluster environment.

The data processing system can communicate the data map with a monitoring device communicatively coupled with the one or more clusters. Upon receipt of packets from the one or more clusters, the monitoring device can enrich the received packets, using the data map, to corelate received packets with associated applications. The monitoring device can enrich the received packets for communication to a service monitor. For example, the monitoring device can encapsulate the received packets in an outer packet having unique identifier tokens or unique synthetic IP addresses corresponding to applications at each endpoint. Accordingly, as received by the service monitor, any of the packets received from any of the task instances during any of the temporal windows include an outer packet having the same unique identifier token or synthetic IP address for the same application. An inner packet can include the ephemeral IP address, of a particular task instance, but which may correspond to a different application outside of the validity window. Such an implementation can aid the service monitor to maintain coherency between various task instances, worker nodes, clusters, or so forth. Accordingly, implementations of the present disclosure can effectively abstract the function of the containerized workload cluster transparently to the execution of the various applications and various management operations of the containerized workload cluster environment.

### Adaptive End-Point Mapping In Packet Acquisition

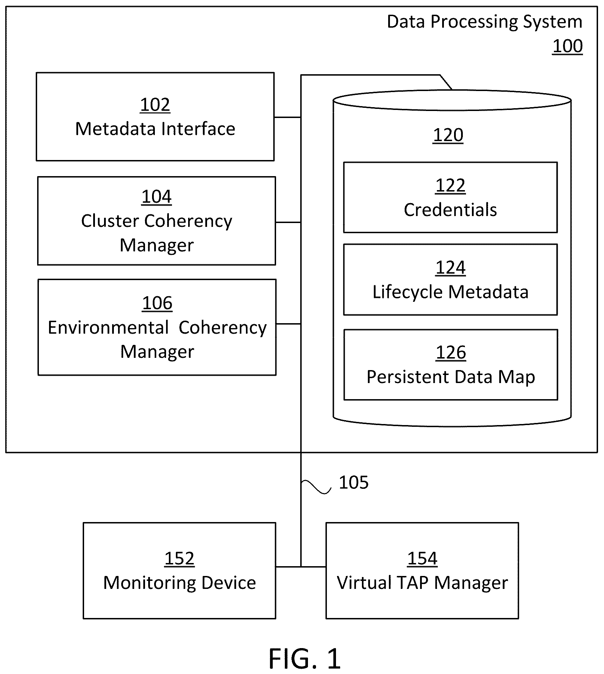

FIG. 1 is an illustration of a data processing system 100 for adaptive end-point mapping, in accordance with an implementation. The data processing system 100 may aid mapping of various endpoints of a system by correlating resources (e.g., applications or other services, as may be provided to various client devices) of a dynamic cluster, such as Kubernetes cluster, with addresses. The addresses can include IP addresses of endpoint components of a containerized workload cluster, such as task instances (e.g., pods or other containers). Accordingly, even where Pods or task instances implementing an application are instantiated, decommissioned, migrated, or otherwise time-variant, service coherency may be maintained.

In brief overview, the data processing system 100 includes a metadata interface 102, as may be configured to interface with a containerized workload cluster to receive metadata therefrom (e.g., from a virtual tap manager 154 of the cluster). The data processing system 100 includes a coherency manager. More particularly, the depicted illustrative example depicts a cluster coherency manager 104 configured to manage coherency between various components of a cluster, and an environmental coherency manager 106 for maintaining coherency between various clusters of an environment. The data processing system 100 interface with (or includes) a monitoring device 152 configured to monitor applications or other resources implemented via the cluster. For example, the monitoring device 152 can include a first portion configured to enrich packets to provide coherency between various of the applications and a second portion configured to monitor the applications using the enriched packets.

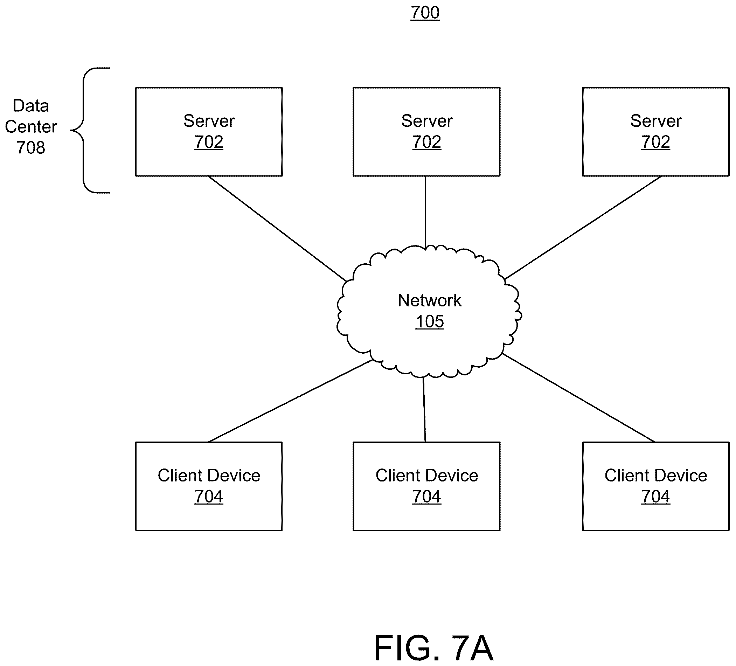

Each of the metadata interface 102, the coherency manager (e.g., the cluster coherency manager 104 or environmental coherency manager 106), the monitoring device 152, and the data repository 120 can include or utilize at least one processing unit or other logic device such as a machine, a virtual machine, or software module configured to communicate with one another or other resources or databases via a network 105. The components of the metadata interface 102, cluster coherency manager 104, environmental coherency manager 106, monitoring device 152, and the data repository 120 can be separate components or a single component (e.g., one or more servers or server clusters). For example, according to the depicted illustrative example, the metadata interface 102 and the coherency managers may be implemented via a first component or subnet and the monitoring device 152 may be implemented according to a second component or subnet. In some embodiments, the data processing system 100 may be an intermediary device between a containerized workload cluster environment and any of various monitoring devices 152 configured to monitor resources of the containerized workload cluster. In some embodiments, the data processing system 100, the containerized workload cluster, the monitoring device 152, or any combination thereof, may share at least some components or be the same device. The data processing system 100 and its components can include virtual elements, such as one or more virtual machines, or cloud-based applications, as well as hardware elements, such as one or more physical machines, processors, logic devices, or circuits as is further described at, for example, FIGS 7A-C.

The data repository 120 can include in-memory data, files, one or more local or distributed databases, and can include a database management system. The data repository 120 can include computer data storage or memory and can store one or more of credentials 122, lifecycle metadata 124, or persistent data maps 126.

The credentials 122 may refer to or include various tokens used to access a system component. For example, the credentials 122 can, upon receipt by a manager of the containerized workload cluster (e.g., a virtual tap manager 154), cause the manager to provide lifecycle metadata 124 to the data processing system 100. According to various embodiments of the present disclosure, the credentials 122 can include any of various keys, usernames, passwords, certificates, or other tokens, for communications between various components. The virtual tap manager 154 can refer to or include a component to configure virtual tap adapters across worker nodes, define traffic mirroring policies based on names, namespaces, labels, or selectors of specific workloads, or manage traffic forwarding to the data processing system 100. The virtual tap manager 154 can couple with the virtual tap adapters via an API of the multi-cluster environment, as an object native to the multi-cluster environment, or another agent communication protocol such as Hypertext Transfer Protocol (HTTP) or representational state transfer (REST) protocol. The virtual tap manager 154 can couple with the Coherency Managers 104/106 in the data processing system 100 via an API over the Metadata Interface 102. The vTAP adapter 218/ 220/222/224 can acquire or capture packets of applications of interests running in the containerized workload cluster, and forward the acquired packets to monitoring devices 152/236, possibly with lifecycle metadata 124 or some portion of the lifecycle metadata 124 that are related to the acquired packets.

The lifecycle metadata 124 may refer to or include one or more addresses or other identifiers of a task instance (e.g., a pod, or other service endpoint). For example, an address can refer to an IP address, MAC address, port number, hostname, partially qualified domain name (PQDN), or so forth. The address may refer to a virtual network endpoint within a cluster. For example, each cluster can maintain a private IP addressing schema, such as a 192.168.X.X. or 10.X.X.X, or a namespace schema as may similarly employ standard naming conventions that may overlap between clusters. Accordingly, while these addresses may be unique within a particular cluster instance, they may be non-unique between the various clusters of a multiple cluster environment. The lifecycle metadata 124 are forwarded to data processing system 100 by vTAP managers for generating persistent data map 126. The lifecycle metadata 124 may also be shared with vTAP Adapter instances in the clusters by the vTAP managers.

Moreover, as task instances are instantiated and decommissioned over time, associated addresses can change and be reused. Accordingly, even where a same name, namespace, IP address or other address can uniquely identify a task instance for one temporal window, that address may be assigned to another task instance of the same or a different application during another, non-overlapping temporal window. Accordingly, the lifecycle metadata 124 can include indications of a temporal window (e.g., start and end times for the window). Like other metadata, the indications of the temporal window can be received from the cluster (e.g., from a virtual tap manager 154 thereof).

In some embodiments, the lifecycle metadata 124 includes identifiers correlating various task instances, services, and applications, as may be included within or used to generate a persistent data map 126. However, at least a portion of identifiers may be generated by the data processing system 100 based on the received lifecycle metadata 124.

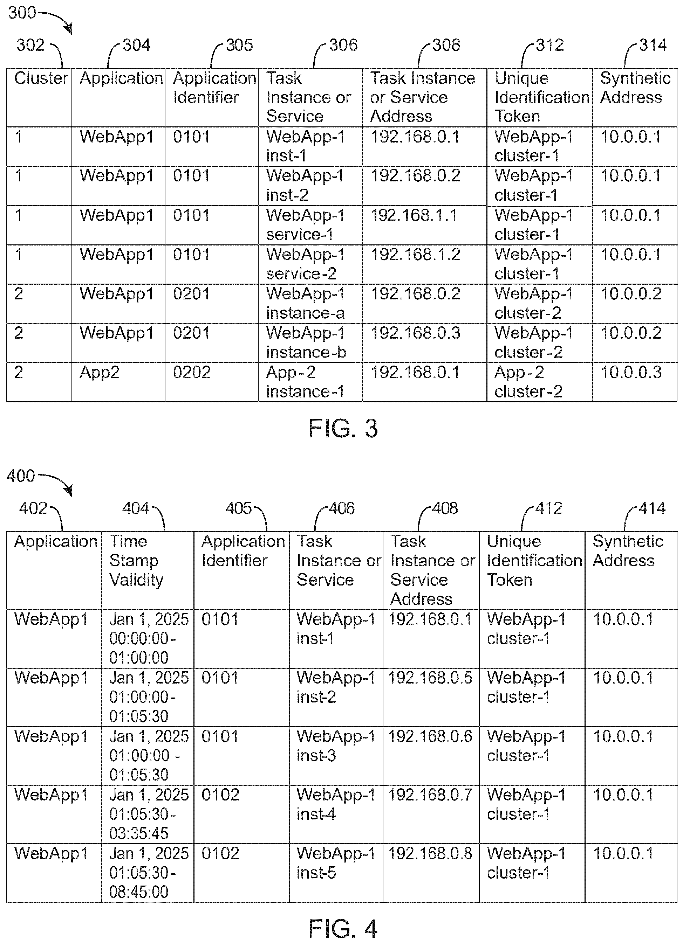

The persistent data maps 126 may refer to or include a data structure including an indication of an endpoint (e.g., a Pod IP address) of a task instance and another identifier, sometimes referred to as a persistent identifier for its persistence across associations with various applications (and potentially multiple addresses). For example, the persistent data maps 126 can correlate one or more task instances of an application having at least two source IP addresses. In some embodiments, the persistent data map 126 further includes indications of a validity window, as may be used to de-conflate addresses associated with multiple applications for different temporal windows. Some examples of persistent data maps 126 are provided at FIGS. 3 and 4.

The data processing system 100 includes at least one metadata interface 102 configured to establish an operative connection with at least one cluster and receive lifecycle metadata 124 therefrom. For example, in the Kubernetes context, a cluster can include a virtual tap manager 154 having an external IP or DNS configured to couple with the metadata interface 102. For example, the virtual tap manager 154 can be configured to listen for requests from the metadata interface 102 and configured to respond to the requests with lifecycle metadata 124. In some embodiments, the virtual tap manager 154 is configured to push (e.g., stream) lifecycle metadata 124 to the metadata interface 102. In some embodiments, the metadata interface 102 is configured to provide credentials 122 to the virtual tap manager 154 to establish the operative connection, or otherwise use the credentials 122 to obtain the lifecycle metadata 124 from the virtual tap manager 154. The virtual tap manager 154 can, in turn, receive the lifecycle metadata 124 from one or more virtual tap adapters associated with one or more corresponding worker nodes of a cluster.

The metadata interface 102 can receive the start and end times from the virtual tap manager 154, in some embodiments. The metadata interface 102 can receive contemporaneous updates of lifecycle metadata 124 (or updates having a known latency) from the virtual tap manager 154 and store the start or end times according to a time of receipt. In some embodiments, the persistent data map 126 may be updated without storing the temporal information in the data map. The updates can include updates to a correspondence between a service and an identifier, as may include a start or end time for such correspondence. The updates can further include packet metadata, flow information, heartbeat messages, logs and diagnostics, event notifications, configuration and control messages such as mirroring policies (e.g., sampling rates or filters based on a source, destination, or protocol).

The data processing system 100 includes at least one coherency manager configured to generate persistent data maps 126 based on lifecycle metadata 124 received by the metadata interface 102. As depicted, the coherency manager may be implemented as one or more cluster coherency managers 104 configured to generate a persistent data map 126 on a per-cluster basis, and an environmental coherency manager 106 configured to generate a multi-cluster environment persistent data map 126. However, such an implementation should not be construed as limiting. For example, some implementations may omit the environment coherency manager 106 (e.g., where a single cluster is present, or where the multiple clusters of a multi-cluster environment are de-conflated according to a naming or IP addressing schema). Some implementations may have a single coherency manager that combines per-cluster and environmental coherency managers, and some other implementations may break down the coherency managers into more components such that each component implements a portion of the functionality only.

Although an address itself may be used as an identifier, in some embodiments, another identifier for a task instance may be used to correlate a task instance with an application. In some embodiments, the other identifier may be provided as one across multiple addresses so that a correlation between the IP address and the application can be derived from a correlation between the identifier and the application. For example, a first task instance having an identifier of UID 0xDEADBEEF-DEAD-BEEF-DEAD-BEEFDEADBEEF can be assigned an endpoint IP address of 10.0.0.20while tasked to a service of a web server. A second task instance having an identifier of UID 0xFACEC0DE-BEEF-FEED-ABCD-123456789ABC can be tasked to the application (e.g. in addition to or instead of the other task instance) and be assigned an endpoint IP address of 10.0.0.30. The coherency manager can map the ephemeral IP addresses with the application based on a first portion of the received lifecycle metadata 124 linking the UID identifiers with the IP addresses, and a second portion of the received lifecycle metadata 124 linking the applications with the UID identifiers. That is, the data processing system 100 can use the UID identifier to correlate applications with the ephemeral IP addresses according to a mapping. Illustrative examples referring to a UID should not be construed as limiting. For example, the identifier can further include an index value, namespace, or so forth.

The cluster coherency manager 104 can generate a data structure of a persistent data map 126 correlating an application with various task instances thereof. For example, the cluster coherency manager 104 can generate the data structure to correlate an address (e.g., an ephemeral IP address) of packets sourced from the cluster with an application instantiated by the cluster. The cluster coherency manager 104 can use received lifecycle metadata 124 to map the ephemeral identifier, such as an IP address of a task instance, to the identifier of the application, such as a UID or a PQDN of the application, which may or may not be ephemeral. For example, the lifecycle metadata 124 can include a first indication that a task instance identifier corresponds to an application identifier and a second indication that the application identifer corresponds to an unique identifier token that is unique in a multi-cluster environment. An example of a persistent data map 126 for a single cluster is provided at FIG. 4, henceforth.

The environmental coherency manager 106 can merge data structures of various containers to generate a persistent data map 126 for a multi-cluster environment. Applications in different clusters may be mapped to the same environmentally unique identifier token so that the monitoring devices 152/236 may aggregate monitoring results based on the environmentally unique identifier tokens, or other identifiers, such as synthetic IP addresses generated from the unique identifier tokens.

The environmental coherency manager 106 can de-conflate identifiers between multiple clusters of a multiple cluster environment (sometimes referred to as a "multi-cluster.") For example, where naming or addressing schemas result in repeated IP addresses, names, or so forth, the environmental coherency manager 106 can append a cluster identifier according to a schema configured to generate a unique identifier across the multi-cluster. An example of a persistent data map 126 for a multi-cluster environment is provided at FIG. 3, henceforth.

The data processing system 100 can interface with (or include) at least one monitoring device 152. The data processing system 100 can provide the monitoring device 152 persistent and unique indications of an endpoint for packets within a multiple cluster environment, even where those endpoints operate with ephemeral or non-unique IP addresses. The monitoring device 152 can include a service monitor configured to monitor at least one application. The monitoring device 152 can include a packet enricher configured to generate enriched packets using the persistent data map 126 generated by the coherency manager. The packet enricher can generate enriched packets including indications of endpoints at the application level corresponding to received packets. For example, the packet enricher can append unique identification tokens to a packet. The unique identification token can include a synthetic IP address, such that a service monitor configured to monitor applications based on an IP address can distinguish between various applications using the synthetic IP addresses associated with the packets. For example, the packet enricher can encapsulate received packets with an outer packet, wherein the IP addresses of the outer packet are the synthetic IP addresses. The IP addresses of an inner packet (also referred to as an encapsulated packet) can correspond to endpoint addresses of source and destination task instances (e.g., pods). Accordingly, the packet enricher can enrich packets received from the cluster with synthetic IP addresses or other unique identification tokens indicative of applications of the endpoints of the packets.

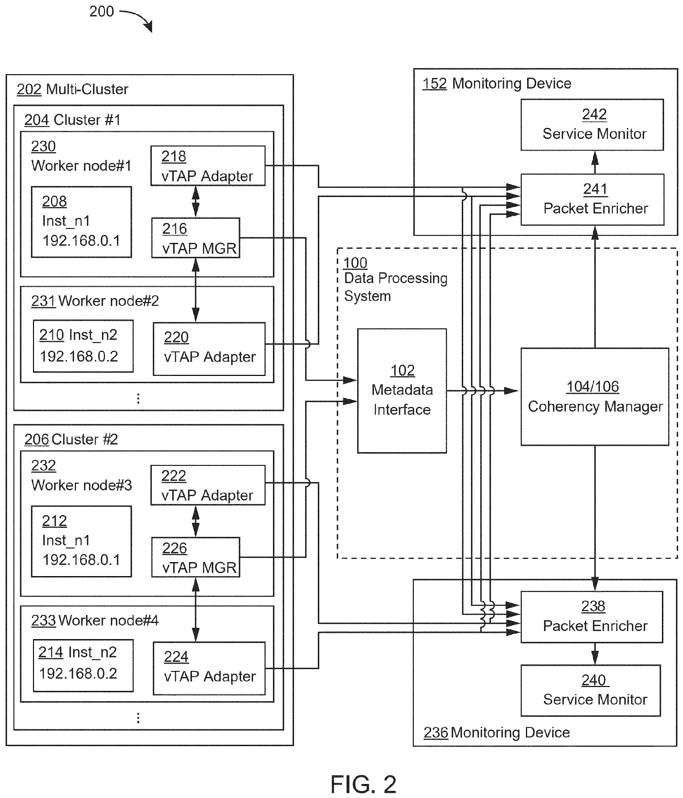

FIG. 2 is an illustration of an example network environment 200 for adaptive end point mapping including a data processing system 100, in accordance with an implementation. The endpoints can refer to any system or component capable of being identified by an address, such as an IP address of a pod of a worker node in a compute cluster. The network environment 200 can include at least one containerized workload cluster. For example, the depicted example includes at least a first cluster 204 and a second cluster 206 of a multi-cluster environment 202. A containerized workload cluster can include at least one worker node. For example, the depicted example includes at least a first worker node 230 and a second worker node 231 of cluster 204, and a third worker node 232 and a fourth worker node 233 of cluster 206. Task instances of applications running in a containerized workload cluster run on the worker node. The network environment 200 further includes at least one service monitor configured to monitor at least one application implemented in the multi-cluster environment 202. For example, the depicted example includes at least a first service monitor 242 (of a first monitoring device 152) and a second service monitor 240 (of a second monitoring device 236). The service monitors can monitor applications implemented on one cluster or multiple clusters of the multi-cluster environment, and the multi-cluster environment can dynamically (re)assign workers, pods, or clusters transparently to the service monitors.

The first monitoring device 152 and second monitoring device 236 can receive packets from one or more clusters of the multi-cluster environment 202. For example, a respective first packet enricher 241 of the first monitoring device 152 and second packet enricher 238 of the second monitoring device 236 can receive packets having ephemeral IP addresses as endpoints (corresponding to source and destination task instances). The respective packet enrichers 241, 238 can further receive persistent data maps 126 corresponding to at least a portion of the received packets. For example, each packet enricher can receive a data map 126 from a coherency manager for all services of the multi-cluster environment 202, or a filtered subset (e.g., applications monitored by a service monitor 242 of the respective monitoring device 152).

The packet enrichers 241, 238 can use the persistent data maps 126 to enrich the received packets. For example, the packet enrichers 241, 238 can encapsulate the received packets in an outer packet, where the IP address of the outer packet are synthetic IP addresses indicating associated applications, as may be shared across various endpoint task instances. In some embodiments, the packet enrichers 241, 238 can further use the persistent data maps 126 to filter packets provided to the service monitor (e.g., may omit provision of non-relevant packets, such as packets relating to other than monitored services). In some embodiments, the vTAP Adapter instances in the clusters can use the lifecycle metadata 124 or persistent data map 126 to filter packets before forwarding the captured packets to the monitoring devices. Such approaches may further reduce a computational load on service monitors according to a reduced packet volume, and reduced distribution of packet payload or meta-data, as may include sensitive information.

With further reference to the multi-cluster environment 202, each of the depicted clusters can instantiate virtualized computing instances or other endpoint task instances. For example, in a Kubernetes based approach, the virtualized computing instances can include one or more (e.g., dozens or hundreds) of pods, each of which is one containerized task instance, running on a same or different worker node of the Kubernetes cluster. Accordingly, the first cluster 204 can include a first task instance 208 running on worker node 230, second task instance 210 running on worker node 231, and so on. As indicated above, an address or other identifier such as a name or IP address can be unique within a cluster. For example, as is depicted, the first task instance 208 and second task instance 210 can be named Inst_n1, Inst_n2, and so on; the respective task instances can be addressed as 192.168.0.1, 192.168.0.2, and so on. As is indicated, the second cluster 206 also includes a constituent first task instance 212, second task instance 214, and so on. These workers can be assigned identifiers (depicted as overlapping identifiers with task instances 208, 210 of the first cluster 204).

Each cluster of the multiple cluster environment 202 can include a cloud network tap, depicted as separate virtual tap (vTAP) adapters coupled with a virtual tap manager (vTAP MGR) of the cluster. More particularly, the first cluster 204 includes a first virtual tap adapter 218 running on a first worker node 230 and a second virtual tap adapter 220 running on a second worker node 231, each being coupled with a virtual tap manager 216 running on a worker node 230 having an externally facing interface coupled with the metadata interface 102 of the data processing system 100. The virtual tap adapters may be deployed in the multiple cluster environment in various ways. For example, the cloud network tap may have one virtual tap adapter per monitored task instance coupled together, the cloud network tap may have one virtual tap adapter per worker node of the cluster independent to monitored task instances, or the cloud network tap may have a number of virtual tap adapters on worker nodes that do not have 1-to-1 relationship with neither the worker nodes nor the monitored task instances. The virtual tap manager of a cluster keeps track of the information of the cluster and manages virtual tap adapters of the cluster. The virtual tap manager may have at least one task instance running on at least one worker node. For example, the depicted example has one task instance of virtual tap manager 216 running on worker node 230 of cluster 204, The virtual tap manager 216 can provide lifecycle metadata including any of various identifiers (e.g., IP addresses of pods, services, and worker nodes as may map to UUIDs (Universally Unique Identifiers) of Kubernetes workloads, services, or worker nodes) and pass the information for mapping to all coupled virtual tap adapters 218, 220 (e.g., on a per-worker node basis). As received, IP addresses of pods of the same workload can map to the same workload UUID and the same service UUID that are defined for the workload. IP addresses of worker nodes can map to the UUID of worker nodes. When the virtual tap adapters 218, 220 capture packets of monitored task instances or services of applications, they can associate packet source and destination IP addresses to UUIDs and include them in the metadata when forwarding the captured packets to monitoring devices 152, 236.

Similarly, the second cluster 206 includes a first virtual tap adapter 222 running on worker node 232 and a second virtual tap adapter 224running on worker node 233, each being coupled with a virtual tap manager 226 having an externally facing interface coupled with the metadata interface 102. In some embodiments, the respective clusters 204, 206 of the multi-cluster environment 202 are coupled with separate instances of the metadata interface 102 or aggregated according to further functionality of the multi-cluster environment 202 (e.g., a control plane). The virtual tap adapters can provide captured packet data upon as instructed by the virtual tap manager 216, 226. The virtual tap manager 216, 226, in turn, can receive the instructions from the data processing system 100 via the metadata interface 102.

The instructions communicated from the virtual tap managers 216, 226 to coupled virtual tap adapters can include an indication to forward captured traffic to at least one packet enricher 241, 238 or a subset of captured traffic to the packet enricher 241, 238. For example, the instructions can implement a filter based on a service identity, source or destination IP address, port number protocol type, Kubernetes or other environmental metadata, packet size, time of day, sampling rate, traffic volume thresholds, connection state (e.g., new, established, or terminated), or combinations thereof. Such filtering can be performed in addition to any filtering (or lack thereof) as may be implemented at the packet enrichers 241, 238 themselves.

FIG. 3 is an illustration of an example data map 300 depicting various contemporaneous processes of a multi-cluster environment 202, in accordance with an implementation. More particularly, the data map 300 is depicted as a data table. This depiction is not intended to limit the present disclosure. Further embodiments of the data map 300 may be implemented as further data structures such as graphs, trees, key-value stores, multi-dimensional arrays, or linked lists. The data map 300 is generated by the data processing system 100 based on topology information of the lifecycle metadata 124 received from a multi-cluster environment 202 (e.g., from the virtual tap manager 216).

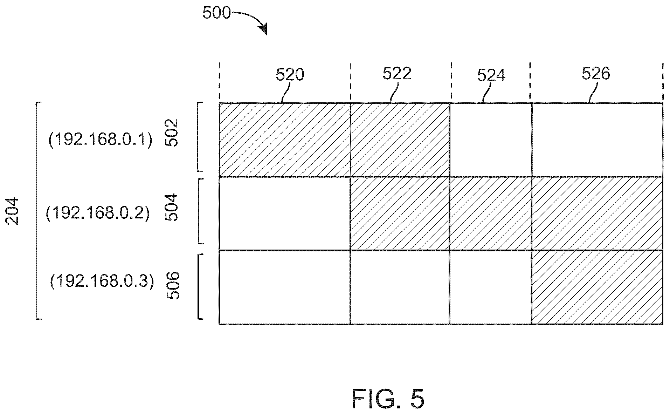

The depicted data map 300 can relate to applications executed using the multi-cluster environment 202 of FIG. 2. For clarity and brevity of the figure, temporal window indications are omitted from the present figure. However, embodiments of the present disclosure contemplate further inclusion of various further fields including such temporal window indications (e.g., beginning and ending times for temporal windows indicating a validity of a correspondence with a service). Some examples of temporal windows, as may be included within the present data map 300, are depicted in FIGS. 4 and 5 henceforth.

A first column 302 of the data map 300 correlates a cluster with other related data items of the data map 300. As depicted, the first column 302 can correlate the cluster with various other data items of the same row. A second column 304 of the data map 300 correlates resources (e.g., a source application of outbound packets) with related data items (including the cluster). For example, various applications such as front-end or back-end web applications, databases, content distribution networks, mail servers, and so on may be indicated with application identifiers in a third column 305. These applications can be identified according to operation of a coherency manager based on lifecycle metadata 124. For example, the lifecycle metadata 124 can include an address of a fifth column 308, depicted as a private IP address of a task instance (e.g., a pod). As depicted, data items corresponding to multiple endpoint task instances or services defined for applications (depicted in multiple rows) of the second column 304 and fourth column 306 can include same data. For example, where multiple task instances implement services for an application, a same application can be indicated in a data item for each of the multiple task instances. As is further depicted, various clusters can include duplicate application names or addresses, and separate clusters may employ conflicting subnets or other overlapping IP address spaces.

A fourth column 306 indicates a unique identifier, depicted as a human readable textual identifier, but which may include other implementations (e.g. a UUID), for various task instances (and more particularly, to each service and pod of an example Kubernetes instance). A sixth column 312 indicates a unique identification token to map a task instance with application. The unique identification token is environmentally unique in a multi-cluster environment.

In some embodiments, as is depicted, the unique identification token can be provided as a human readable textual identifier which maintains coherency between the task instance and the service. For example, as is depicted, the task instances and the services defined of an application can map to the same unique identification token that represents the application. In a multi-cluster environment, different applications in separate clusters, though having the same name, can be mapped to different unique identification tokens.

In some embodiments, the unique identification token can be (or correspond to) a synthetic IP address of a seventh column 314. For example, a first IP address (e.g., 10.0.0.1) can correspond to all task instances for the first application, a second IP address (e.g., 10.0.0.2) can be provided to (or correspond to) a second application, and so forth. Such synthetic IP addresses are unique across all the clusters and can be used to represent the applications across all clusters. The synthetic IP addresses can be virtual IP addresses used by the applications, or reserved IP addresses assigned to applications by the monitoring system for the purpose of uniquely identifying the applications in a multi-cluster environment.

FIG. 4 is an illustration of an example data map 400 depicting temporally diverse mappings of a same application, in accordance with an implementation. As for the data map 300 of FIG. 3, the present table should not be construed so as to limit the present disclosure. In the depicted example, a single application is provided. Such an example data structure may be provided to a service monitor configured to monitor applications related to the captured packets forwarded to corresponding monitoring device. For example, a data processing system 100 can provide a portion of a multi-application data map 400 to each of various service monitors for corresponding applications.

The depicted example includes a first column 402 indicating an application, as discussed above with regard to the second column 304 of FIG. 3, above. A second column 404 of the example data map 400 indicates a temporal window indicating a validity of a correspondence between the task instance or service and the application. For example, the second column 404 can include data items of a start time for a validity of a temporal window and an end time for the temporal window. Application identifiers are provided in a third column 405, as for the third column 305 of FIG. 3. Further examples of the temporal windows are provided henceforth, via the graphical depictions of FIG. 5. As indicated, task instance or service identifiers in depicted temporal windows are unique to each other, since the depicted task instance endpoints are not simultaneously assigned to multiple applications. Further, the some of the depicted temporal windows are depicted as contagious, as may correspond to transitions between task instances, while further of the depicted temporal windows are depicted as overlapping, as may correspond to assignment of multiple task instances to a same application (e.g., scaling up or down).

A fifth column 408 indicates an IP address, as discussed above with regard to the fifth column 308 of FIG. 3. A fourth column 406 indicates an identifier, as discussed above with regard to the fourth column 306 of FIG. 3. A sixth column 412 and seventh column 414 indicate a respective unique identification token and further synthetic address, as discussed above with regard to the sixth column 312 and seventh column 314 of FIG. 3. In some embodiments, the synthetic address may itself be provided as the unique identification token. In some embodiments, an index value can be provided as or further include a human readable unique identification token, as is depicted in a sixth column 412.

FIG. 5 depicts a time-series visualization 500 of some illustrative examples of temporal windows over time for various task instance endpoints, in accordance with an implementation. The depicted temporal windows can correspond to various task instances, or other instances, components, or microservices used to execute and manage applications of a network environment 200. More particularly, the temporal windows are provided as relating to task instances of a cluster 204. Accordingly, systems of the present disclosure can map a same unique identification token to packets sourced from or destined to the depicted task instances of an application during their respective validity windows. Further, systems of the present disclosure can use the unique identification token to encapsulate any packets from or to the task instances during their respective validity windows in an outer packet having a same synthetic IP address, as may aid a recipient to monitor the application.

During a first temporal window 520, a first task instance 502 of the first cluster 204 executes an application. Accordingly, packets associated with the application are sent from the first task instance 502 and may be sourced from a first source address (e.g., X.X.X.1). During a second temporal window 522, a second task instance 504 additionally executes the application. Accordingly, packets associated with the application may be addressed from either of the first source address or a second source address (e.g., X.X.X.2). However, prior (and subsequent) to the second temporal window 522, packets sourced from the second source address may be associated with a different application. Accordingly, providing the temporal window in a data structure may aid a recipient of the data structure to distinguish between packets associated with various applications, even where those packets are sourced from time-variant addresses (e.g., as depicted in FIG. 4). In some embodiments, a data processing system 100 updates the monitoring device 152, 236 with the lifecycle metadata 124 and persistent data map 126 in each temporal window such that the packet enricher 241, 238 may use the data structures of the current time window to enrich packets and the service monitor 242, 240 identify the applications even though the packets are sourced from time-variant addresses.

Incident to a start of a third temporal window 524, the first task instance 502 of the first cluster 204 is decommissioned, re-assigned, or otherwise disassociated with the service. Such disassociation can relate to a drop in load demand or failure of the task instance. The multi-cluster environment 202 can continue to adjust a number of task instances 502 according to computational load, bandwidth, storage, or other load demands. For example, a third task instance 506 can be instantiated as corresponding to an inception of a fourth temporal window 526. The various task instances can be similarly disposed or vary from one another. For example, responsive to a low-bandwidth high-compute load, the multi-cluster environment (e.g., a control plane thereof) can associate a high-compute task instance or disassociate a high-bandwidth task instance (e.g., to reallocate the high-bandwidth task instance to a process having a higher bandwidth load).

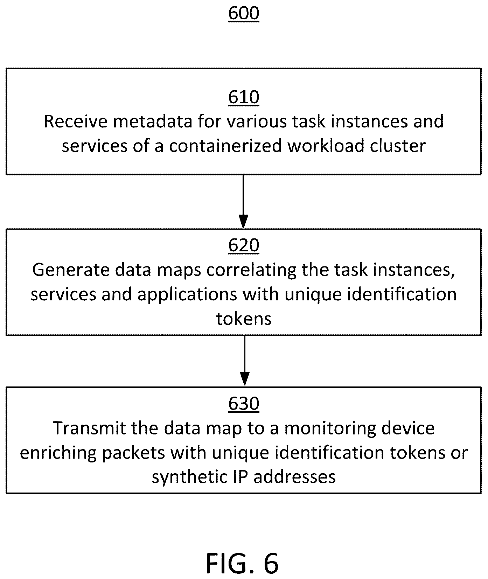

FIG. 6 is an example of a method 600 for adaptive end point mapping, in accordance with an implementation. The method 600 can be performed by one or more system, component, visualization, or module depicted in FIGS. 1-5 or 7A-7C. Such a system can include at least a data processing system 100 and may further include at least some components of a monitoring device 152. The method 600 may include additional or fewer operations; the operations may be performed in any order. Performance of the method 600 may aid the data processing system 100 to map dynamic endpoints of a containerized workload cluster to maintain service coherency. By maintaining service coherency, a monitoring device can monitor operations of an application to detect anomalies of monitored applications.

At operation 610, the system receives metadata 124 from a containerized workload cluster (e.g., via at least one metadata interface 102). The metadata 124 is for any of various applications executed via a plurality of task instances. The task instances can refer to pods or containers, or other aspects of a virtualization clusters such as workers or other nodes. More particularly, the metadata 124 can include an identifier for one or more task instances for each application and an address corresponding to the task instances. The identifier, as may be separate from the address, can refer to various identification schemas. For example, the identifier can refer to or include any of a namespace, task instance name, IP address, or unique identifier (UID), among others.

As described above, the system can receive metadata 124 from a single cluster or multiple clusters of a multi-cluster environment 202. Accordingly, the system can receive further metadata 124 from a further containerized workload cluster. Moreover, the system can receive metadata 124 from any number of worker nodes. For example, the system can receive the metadata 124 from task instances distributed across multiple worker nodes. One or more of the multiple worker nodes can be disposed in each cluster of the multi-cluster environment. For example, the task instances can refer to or include pods implemented by the worker nodes as in the case of a Kubernetes cluster (e.g., the containerized workload cluster being a Kubernetes cluster).

At operation 620, the system generates a data map 126 correlating each of the plurality of task instances or services of an application with a unique identification token. To generate the data map 126, the system uses the identifier and the address of the metadata 124. The generated data map 126 includes a data item or other entry for each workload or service of the various application (e.g., a microservice or so forth).

Where the system receives metadata 124 from multiple clusters of the multi-cluster environment 202 at operation 610, the system can proceed to generating a second data map 126 to the monitoring device, the monitoring device configured to use the unique identification token to assign a second synthetic IP address. The first and second data maps 126 may, but need not, refer to a same data structure. For example, in some embodiments, the first and second data maps 126 corresponding to first and second cluster may be included in the same data structure, as depicted in the tabular data map 300 of FIG. 3. In some embodiments, data for separate clusters (or services) can be depicted in separate data structures, as depicted in the tabular data map 400 of FIG. 4. The first and second synthetic IP addresses can be provided as unique to the multi-cluster environment 202. Accordingly, a monitoring device receiving the first and second synthetic IPs (or any further separate synthetic IP addresses) can use the respective values to distinguish between various applications associated therewith.

In some embodiments, the one or more data maps 126 may include or are associated with a temporal window for a validity of a correspondence between the address and the application implemented by the one or more tasks instances. The temporal window can be determined based on the metadata 124, such as based on times included in the metadata 124 (e.g., in a payload of the metadata 124 or a timestamp of the metadata 124), or a time of receipt of the metadata 124. Accordingly, the system can assign the same synthetic IP address to various of the different task instances in each of various non-overlapping temporal windows, when a quantity of those task instances varies between the various of the non-overlapping temporal windows.

At operation 630, the system transmits the data map 126 to a monitoring device 152. The monitoring device is configured to use the unique identification token to assign a synthetic internet protocol (IP) address for enriched packets comprising an outer packet encapsulating each of a plurality of received packets. For example, the unique identification token can correspond to the synthetic IP address on a one-to-one basis. An inner packet of each of the enriched packets can have IP addresses of the task instance endpoints of applications sending or receiving the packet.

The system can transmit various data maps 126 to monitoring devices, as data map 126 may evolve over various temporal windows for a validity of a correspondence between identifiers and unique identification tokens, or may reduce a computational load at the monitoring devices. For example, the system can transmit the second data map 126 referred to above to a same or different monitoring device as the first data map 126. The receiving monitoring device can use the updated data map 126 to enrich packets with synthetic IP addresses. The synthetic IP address is unique to the environment (e.g., so that the synthetic IP addresses may be used to uniquely identify an application of the environment).

The system can include multiple network interfaces as may refer to physical or virtual components configured to facilitate communications with further devices of an environment. For example, the communications can include intra-device communications, communications over a private network, or communications over a public network (e.g., the internet). Metadata 124 may be received over a first of the network interfaces, as may be coupled between one or more metadata interfaces 102 and one or more clusters. The data map 126 may be transmitted over a second of the network interfaces, as may be coupled between one or more coherency managers and one or more packet enrichers.

The monitoring device may be configured to transmit the enriched packets to a device configured to monitor the service of the various applications of the multi-cluster environment 202. For example, such a transmission can refer to a communication between a packet enricher and a service monitor, as may be implemented on one or more devices, clusters, network locations, or so forth.

In a non-limiting example, a Kubernetes vTap uses a vTap manager to obtain Kubernetes topology information via Kubernetes API in real time and send the information to the data processing system 100. The topology information includes: IP addresses of pods, services, and worker nodes, universally unique identifiers (UUIDs) of Kubernetes workloads, services, and worker nodes, PQDN (partially qualified domain name) of Kubernetes workloads, services, and worker nodes that consist of Kubernetes defined name, namespace, kind, and cluster domain suffix or user-defined unique cluster name. The data processing system 100 using the Kubernetes vTap obtains the Kubernetes topology information reported by the Kubernetes vTap manager and combines it with optional user-defined names of Kubernetes workload or services, to create and update in real time the mapping of the UUID to a unique pseudo-IP address assigned to the end point name, as well as mapping of the pseudo-IP address to end point name. The mapping is adaptive to UUID changes by Kubernetes as long as the application workloads or service names do not change.

The Kubernetes vTap manager creates a mapping from IP addresses of pods, services, and worker nodes to UUIDs of workloads or services, and passes the mapping information to every vTap adapter on every worker node. IP addresses of Pods of the same workload map to the same workload UUID and the same service UUID that are defined for the workload. IP addresses of worker nodes map to the UUID of worker nodes.

When the Kubernetes vTap adapter captures packets of monitored applications, it maps packet source and destination IP addresses to UUIDs and puts them in the metadata forwarded along with the captured packets to monitoring devices.

The monitoring devices receiving packets acquired from the Kubernetes vTap map the UUIDs in the metadata to synthetic IP addresses assigned by a centralized OAM function, and inserts an outer IP layer with the mapped synthetic IP addresses in the packets, creating synthetic packets in an IP-in-IP format, in which the outer layer IP addresses represents the application end points at the workload/service level while the inner layer IP addresses represent the ephemeral Pod level end points.

The monitoring devices aggregate monitoring results at application workload/service level based on outer IP addresses and retain Pod level end point information on the packets via the inner IP addresses. The monitoring devices present monitoring results to users with application end point names mapped from the synthetic IP addresses.

In an aspect, a method for mapping dynamic endpoints of a containerized workload cluster to maintain service coherency can include receiving, from a containerized workload cluster, metadata for a plurality of applications executed via a plurality of task instances, the metadata comprising: an identifier for one or more task instances or services of each application; and an address corresponding to each of the one or more task instances or services of each application; generating, using the identifier and the address of the metadata, a data map correlating each of the plurality of applications with a unique identification token, the data map comprising an entry for each task instance or service of an application of the plurality of applications; and transmitting the data map to a monitoring device configured to enrich received packets with unique identification tokens of the endpoints at the application level using the unique identification tokens to assign synthetic internet protocol (IP) addresses for enriched packets comprising an outer packet encapsulating each of a plurality of received packets.

In some embodiments, the monitoring device is further configured to monitor the enriched packets of the application of the plurality of applications. In some embodiments, the identifier for each of the plurality of task instances comprise an IP address; the identifier for each of the plurality of applications comprise one of a namespace, task instance name, IP address, or unique identifier (UID); the unique identification token corresponds to a synthetic IP address on a one-to-one basis; and the enriched packets comprise inner packets having a source IP address of the one or more task instances or services of each application.

In some embodiments, the method further includes receiving, from an environment including the containerized workload cluster, second metadata from a second containerized workload cluster; generating, using a second identifier and a second address of the second metadata, a second data map correlating each of the plurality of applications with a second unique identification token; and transmitting the second data map to the monitoring device, the monitoring device configured to use the unique identification token to assign a second synthetic IP address, the synthetic IP address and the second synthetic IP address each being unique to the environment.

In some embodiments, the method further includes generating the data map to include a temporal window for a validity of a correspondence between the address and the one or more task instances or services, wherein the temporal window is determined based on the metadata. In some embodiments, the method further includes assigning a same synthetic IP address for a plurality of different task instances or services for each of a plurality of non-overlapping temporal windows, wherein: a quantity of the one or more task instances varies between the non-overlapping temporal windows.

In some embodiments, the metadata is received via a first network interface; and the data map is transmitted via a second network interface. In some embodiments, the one or more task instances or services are distributed across a plurality of worker nodes. In some embodiments, the containerized workload cluster is a Kubernetes cluster; and the one or more task instances or services are pods implemented by a worker node.

In an aspect, a system for mapping dynamic endpoints of a containerized workload cluster to maintain service coherency includes a data processing system comprising one or more processors coupled with memory, the data processing system configured to: receive, from a containerized workload cluster, metadata for a plurality of applications executed via a plurality of task instances, the metadata comprising: a unique identifier (UID) for one or more task instances or services of each application; and an internet protocol (IP) address corresponding to each of the one or more task instances of each application; generate, using the UID and the IP address, a data map correlating each of the plurality of applications with a unique identification token, the data map comprising an entry for each task instance or service of an application of the plurality of applications; and transmit the data map to a monitoring device configured to enrich received packets with unique identification tokens of the endpoints at the application level using the unique identification tokens to assign synthetic IP addresses for enriched packets comprising an outer packet encapsulating each of a plurality of received packets.

In some embodiment, the system further includes the monitoring device. The monitoring device may be further configured to monitor the enriched packets of the application of the plurality of applications. In some embodiments, the unique identification token corresponds to the synthetic IP address on a one-to-one basis; and the enriched packets comprise inner packets having original IP addresses of the one or more task instances or services of each application.

In some embodiments, the data processing system is further configured to de-conflate a UID of the containerized workload cluster with a same UID of a further containerized workload cluster according to an assignment of separate synthetic IP addresses to the UID of the containerized workload cluster and the same UID of the further containerized workload cluster. In some embodiments, the data processing system is further configured to generate the data map to include a temporal window for a validity of a correspondence between the IP address and the application implemented by the one or more task instances or services, wherein the temporal window is determined based on the metadata. In some embodiments, the data processing system is further configured to: assign a same IP Address as the unique identification token for a plurality of different task instances or services for each of a plurality of non-overlapping temporal windows, wherein a quantity of the one or more task instances or services varies between the non-overlapping temporal windows.

In some embodiments, the metadata is received via a first network interface; the data map is transmitted via a second network interface; the one or more task instances or services are distributed across a plurality of worker nodes; and the containerized workload cluster is a Kubernetes cluster.

In an aspect, a non-transitory computer readable storage medium may include instructions stored thereon that, when executed by a processor, cause the processor to receive, from a data processing system, a data map correlating each of a plurality of services of an application with a unique identification token; receive, from a containerized workload cluster, a plurality of packets; use the unique identification token to assign a synthetic IP address for enriched packets comprising an outer packet encapsulating each of the plurality of the received packets; and transmit the enriched packets to a device configured to monitor the service of the plurality of services of the application.

In some embodiments, the instructions are configured to cause the processor to de-conflate a UID of the containerized workload cluster with a same UID of a further containerized workload cluster according to an assignment of separate synthetic IP addresses to the UID of the containerized workload cluster and the same UID of the further containerized workload cluster. In some embodiments, the enriched packets comprise inner packets having original IP addresses of one or more task instances or services of the application of the containerized workload cluster executing the application. In some embodiments, the instructions are configured to cause the processor to assign the synthetic IP address based on a temporal window indicated in the data map, the temporal window indicating a validity of a correspondence between the unique identification and the service.

### Computer Network Environment

FIG. 7A depicts an example network environment that can be used in connection with the methods and systems described herein. In brief overview, the network environment 700 includes one or more client devices. Client devices 704 may be generally referred to as clients, client application, client nodes, or client endpoints (but should be distinguished from the endpoint task instances of the containerized workload cluster environment). The client devices 704 are in communication with one or more servers 702 (also generally referred to as servers, server applications, server nodes, or server endpoints) via one or more networks 105. The servers 702 may implement various virtualized environments as may include multi-cluster environments. The client devices 704 may implement the same virtualized environments as the servers 702 do. The client devices 704 can access servers over the network 105. In some embodiments, a client device 704 may be a server device 702 for other client devices 704, and a server device 702 may be a client device 704 of other server devices 702.

Although FIG. 7A shows a network 105 between the client devices 704 and the servers 702, the client devices 704 and the servers 702 can be on the same network 105. In embodiments, there are multiple networks 105 between the client devices 704 and the servers 702. The network 105 can include multiple networks such as a private network and a public network. The network 105 can include multiple private networks.

The network 105 can be connected via wired or wireless links. Wired links can include Digital Subscriber Line (DSL), coaxial cable lines, or optical fiber lines. The wireless links can include BLUETOOTH, Wi-Fi, Worldwide Interoperability for Microwave Access (WiMAX), an infrared channel or satellite band. The wireless links can also include any cellular network standards used to communicate among mobile devices, including standards that qualify as 1G, 2G, 3G, 4G, 5G or other standards. The network standards can qualify as one or more generation of mobile telecommunication standards by fulfilling a specification or standards such as the specifications maintained by International Telecommunication Union. Examples of cellular network standards include AMPS, GSM, GPRS, UMTS, LTE, LTE Advanced, Mobile WiMAX, and WiMAX-Advanced. Cellular network standards can use various channel access methods e.g., FDMA, TDMA, CDMA, or SDMA. In some embodiments, different types of data can be transmitted via different links and standards. In other embodiments, the same types of data can be transmitted via different links and standards.

The network 105 can be any type and/or form of network. The geographical scope of the network 105 can vary widely and the network 105 can be a body area network (BAN), a personal area network (PAN), a local-area network (LAN), e.g., Intranet, a metropolitan area network (MAN), a wide area network (WAN), or the Internet. The topology of the network 105 can be of any form and can include, e.g., any of the following: point-to-point, bus, star, ring, mesh, or tree. The network 105 can be an overlay network which is virtual and sits on top of one or more layers of other networks 105. The network 105 can be of any such network topology as known to those ordinarily skilled in the art capable of supporting the operations described herein. The network 105 can utilize different techniques and layers or stacks of protocols, including, e.g., the Ethernet protocol or the internet protocol suite (TCP/IP). The TCP/IP internet protocol suite can include application layer, transport layer, internet layer (including, e.g., IPv6), or the link layer. The network 105 can be a type of a broadcast network, a telecommunications network, a data communication network, or a computer network.

The network environment 700 can include multiple, logically grouped servers 702. The logical group of servers can be referred to as a data center 708 (or server farm or machine farm). In embodiments, the servers 702 can be geographically dispersed. The data center 708 can be administered as a single entity or different entities. The data center 708 can include multiple data centers 708 that can be geographically dispersed. The servers 702 within each data center 708 can be homogeneous or heterogeneous (e.g., one or more of the servers 702 or machines 702 can operate according to one type of operating system platform (e.g., WINDOWS NT, manufactured by Microsoft Corp. of Redmond, Washington), while one or more of the other servers 702 can operate on according to another type of operating system platform (e.g., Unix, Linux, or Mac OS X)). The servers 702 of each data center 708 do not need to be physically proximate to another server 702 in the same machine farm 708. Thus, the group of servers 702 logically grouped as a data center 708 can be interconnected using a network. Management of the data center 708 can be de-centralized. For example, one or more servers 702 can comprise components, subsystems and modules to support one or more management services for the data center 708.

Server 702 can be a file server, application server, web server, proxy server, appliance, network appliance, gateway, gateway server, virtualization server, deployment server, SSL VPN server, or firewall. In embodiments, the server 702 can be referred to as a remote machine or a node. Multiple nodes can be in the path between any two communicating servers.

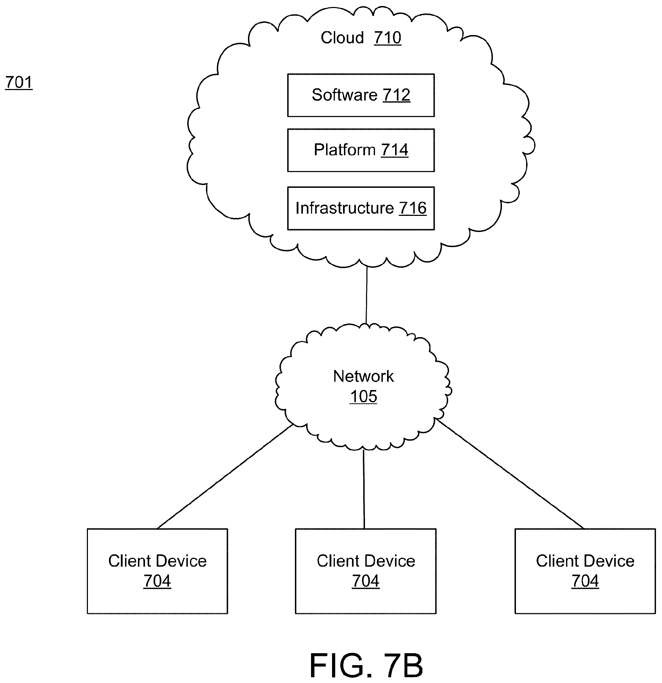

FIG. 7B illustrates an example cloud computing environment. A cloud computing environment 701 can provide a client device 704 with one or more resources provided by a network environment. The cloud computing environment 701 can include one or more client devices, in communication with the cloud 710 over one or more networks 105. Client devices 704 can include, e.g., thick clients, thin clients, and zero clients. A thick client can provide at least some functionality even when disconnected from the cloud 710 or servers 702. A thin client or a zero client can depend on the connection to the cloud 710 or server 702 to provide functionality. A zero client can depend on the cloud 710 or other networks 105 or servers 702 to retrieve operating system data for the client device. The cloud 710 can include back-end platforms, e.g., servers 702, storage, server farms or data centers.

The cloud 710 can be public, private, or hybrid. Public clouds can include public servers 702 that are maintained by third parties to the client devices 704 or the owners of the clients. The servers 702 can be located off-site in remote geographical locations as disclosed above or otherwise. Public clouds can be connected to the servers 702 over a public network. Private clouds can include private servers 702 that are physically maintained by client devices 704 or owners of clients. Private clouds can be connected to the servers 702 over a private network 105. Hybrid clouds can include both the private and public networks 105 and servers 702.

The cloud 710 can also include a cloud-based delivery, e.g., Software as a Service (SaaS) 712, Platform as a Service (PaaS) 714, and the Infrastructure as a Service (IaaS) 716. IaaS can refer to a user renting the use of infrastructure resources that are needed during a specified time period. IaaS providers can offer storage, networking, servers or virtualization resources from large pools, allowing the users to quickly scale up by accessing more resources as needed. PaaS providers can offer functionality provided by IaaS, including, e.g., storage, networking, servers or virtualization, as well as additional resources such as, e.g., the operating system, middleware, or runtime resources. SaaS providers can offer the resources that PaaS provides, including storage, networking, servers, virtualization, operating system, middleware, or runtime resources. In some embodiments, SaaS providers can offer additional resources including, e.g., data and application resources.

Client devices 704 can access IaaS resources, SaaS resources, or PaaS resources. In embodiments, access to IaaS, PaaS, or SaaS resources can be authenticated. For example, a server or authentication server can authenticate a user via security certificates, HTTPS, or API keys. API keys can include various encryption standards such as, e.g., Advanced Encryption Standard (AES). Data resources can be sent over Transport Layer Security (TLS) or Secure Sockets Layer (SSL).

The client device 704and server 702 can be deployed as and/or executed on any type and form of computing device, e.g., a computer, network device or appliance capable of communicating on any type and form of network and performing the operations described herein.

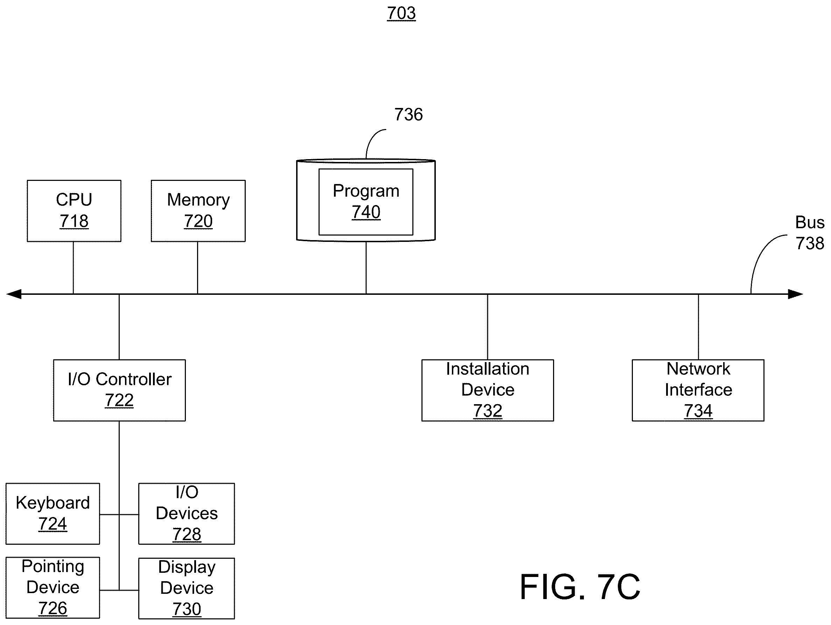

FIG. 7C depicts block diagrams of a computing device 703 useful for practicing an embodiment of the client device 704 or a server 702. As shown in FIG. 7C, each computing device 703 can include a central processing unit 718, and a main memory unit 720. As shown in FIG. 7C, a computing device 703 can include one or more of a storage device 736, an installation device 732, a network interface 734, and I/O controller 722, a display device 730, a keyboard 724 or a pointing device 726, e.g., a mouse. The storage device 736 can include, without limitation, a program 740, such as an operating system, software, or software associated with data processing system 100.

The central processing unit 718 is any logic circuitry that responds to, and processes instructions fetched from the main memory unit 720. The central processing unit 718 can be provided by a microprocessor unit, e.g.: those manufactured by Intel Corporation of Mountain View, California. The computing device 703 can be based on any of these processors, or any other processor capable of operating as described herein. The central processing unit 718 can utilize instruction level parallelism, thread level parallelism, different levels of cache, and multi-core processors. A multi-core processor can include two or more processing units on a single computing component.

Main memory unit 720 can include one or more memory chips capable of storing data and allowing any storage location to be directly accessed by the microprocessor 718. Main memory unit 720 can be volatile and faster than storage 736 memory. Main memory units 720 can be dynamic random-access memory (DRAM) or any variants, including static random-access memory (SRAM). The memory 720 or the storage 736 can be non-volatile; e.g., non-volatile read access memory (NVRAM). The memory 720 can be based on any type of memory chip, or any other available memory chips. In the example depicted in FIG. 7C, the processor 718 can communicate with memory 720 via a system bus 738.

A wide variety of I/O devices 728 can be present in the computing device 703. Input devices 728 can include keyboards, mice, trackpads, trackballs, touchpads, touch mice, multi-touch touchpads and touch mice, microphones, multi-array microphones, drawing tablets, cameras, or other sensors. Output devices can include video displays, graphical displays, speakers, headphones, or printers.

I/O devices 728 can have both input and output capabilities, including, e.g., haptic feedback devices, touchscreen displays, or multi-touch displays. Touchscreen, multi-touch displays, touchpads, touch mice, or other touch sensing devices can use different technologies to sense touch, including, e.g., capacitive, surface capacitive, projected capacitive touch (PCT), in-cell capacitive, resistive, infrared, waveguide, dispersive signal touch (DST), in-cell optical, surface acoustic wave (SAW), bending wave touch (BWT), or force-based sensing technologies. Some multi-touch devices can allow two or more contact points with the surface, allowing advanced functionality including, e.g., pinch, spread, rotate, scroll, or other gestures. Some touchscreen devices, including, e.g., Microsoft PIXELSENSE or Multi-Touch Collaboration Wall, can have larger surfaces, such as on a table-top or on a wall, and can also interact with other electronic devices. Some I/O devices 728, display devices 730 or group of devices can be augmented reality devices. The I/O devices can be controlled by an I/O controller 722 as shown in FIG. 7C. The I/O controller 722 can control one or more I/O devices, such as, e.g., a keyboard 724 and a pointing device 726, e.g., a mouse or optical pen. Furthermore, an I/O device can also provide storage and/or an installation device 732 for the computing device 703. In embodiments, the computing device 703 can provide USB connections (not shown) to receive handheld USB storage devices. In embodiments, an I/O device 728 can be a bridge between the system bus 738 and an external communication bus, e.g., a USB bus, a SCSI bus, a FireWire bus, an Ethernet bus, a Gigabit Ethernet bus, a Fibre Channel bus, or a Thunderbolt bus.

In embodiments, display devices 730 can be connected to I/O controller 722. Display devices can include, e.g., liquid crystal displays (LCD), electronic papers (e-ink) displays, flexile displays, light emitting diode displays (LED), or other types of displays. In some embodiments, display devices 730 or the corresponding I/O controllers 722 can be controlled through or have hardware support for OPENGL or DIRECTX API or other graphics libraries. Any of the I/O devices 728 and/or the I/O controller 722 can include any type and/or form of suitable hardware, software, or combination of hardware and software to support, enable or provide for the connection and use of one or more display devices 730 by the computing device 703. For example, the computing device 703 can include any type and/or form of video adapter, video card, driver, and/or library to interface, communicate, connect or otherwise use the display devices 730. In embodiments, a video adapter can include multiple connectors to interface to multiple display devices 730.

The computing device 703 can include a storage device 736 (e.g., one or more hard disk drives or redundant arrays of independent disks) for storing an operating system or other related software, and for storing application software programs 740 such as any program related to the systems, methods, components, modules, elements, or functions depicted in FIGS. 1, or 2. Examples of storage device 736 include, e.g., hard disk drive (HDD); optical drive including CD drive, DVD drive, or BLU-RAY drive; solid-state drive (SSD); USB flash drive; or any other device suitable for storing data, as may be referred to as a non-transitory computer readable storage medium having instructions stored thereon. Storage devices 736 can include multiple volatile and non-volatile memories, including, e.g., solid state hybrid drives that combine hard disks with solid state cache. Storage devices 736 can be non-volatile, mutable, or read-only. Storage devices 736 can be internal and connect to the computing device 703 via a bus 738. Storage device 736 can be external and connect to the computing device 703 via an I/O device 730 that provides an external bus. Storage device 736 can connect to the computing device 703 via the network interface 734 over a network 105. Some client devices 704 may not require a non-volatile storage device 736 and can be thin clients or zero client devices. Some storage devices 736 can be used as an installation device 732 and can be suitable for installing software and programs.

The computing device 703 can include a network interface 734 to interface to the network 105 through a variety of connections including, but not limited to, standard telephone lines LAN or WAN links (*e.g.,* 802.11, T1, T3, Gigabit Ethernet, Infiniband), broadband connections (*e.g.,* ISDN, Frame Relay, ATM, Gigabit Ethernet, Ethernet-over-SONET, ADSL, VDSL, BPON, GPON, fiber optical including FiOS), wireless connections, or some combination of any or all of the above. Connections can be established using a variety of communication protocols (e.g., TCP/IP, Ethernet, ARCNET, SONET, SDH, Fiber Distributed Data Interface (FDDI), IEEE 802.11a/b/g/n/ac CDMA, GSM, WiMax and direct asynchronous connections). The computing device 703 can communicate with other computing devices 702 via any type and/or form of gateway or tunneling protocol e.g., Secure Socket Layer (SSL) or Transport Layer Security (TLS), QUIC protocol, or the Citrix Gateway Protocol manufactured by Citrix Systems, Inc. of Ft. Lauderdale, Florida. The network interface 734 can include a built-in network adapter, network interface card, PCMCIA network card, EXPRESSCARD network card, card bus network adapter, wireless network adapter, USB network adapter, modem or any other device suitable for interfacing the computing device 703 to any type of network capable of communication and performing the operations described herein.

A computing device 703 of the sort depicted in FIG. 7C can operate under the control of an operating system, which controls scheduling of tasks and access to system resources. The computing device 703 can be running any operating system configured for any type of computing device, including, for example, a desktop operating system, a mobile device operating system, a tablet operating system, or a smartphone operating system.

The computing device 703 can be any workstation, telephone, desktop computer, laptop or notebook computer, netbook, ULTRABOOK, tablet, server, handheld computer, mobile telephone, smartphone or other portable telecommunications device, media playing device, a gaming system, mobile computing device, or any other type and/or form of computing, telecommunications or media device that is capable of communication. The computing device 703 has sufficient processor power and memory capacity to perform the operations described herein. In some embodiments, the computing device 703 can have different processors, operating systems, and input devices consistent with the device.

In embodiments, the status of one or more client or other computing devices, 703 in the network 105 can be monitored as part of network management. In embodiments, the status of a machine can include an identification of load information (e.g., the number of processes on the machine, CPU and memory utilization), of port information (e.g., the number of available communication ports and the port addresses), or of session status (e.g., the duration and type of processes, and whether a process is active or idle). In another of these embodiments, this information can be identified by a plurality of metrics, and the plurality of metrics can be applied at least in part towards decisions in load distribution, network traffic management, and network failure recovery as well as any aspects of operations of the present solution described herein.

The processes, systems and methods described herein can be implemented by the computing device 703 in response to the CPU 718 executing an arrangement of instructions contained in main memory 720. Such instructions can be read into main memory 720 from another computer-readable medium, such as the storage device 736. Execution of the arrangement of instructions contained in main memory 720 causes the computing device 703 to perform the illustrative processes described herein. One or more processors in a multi-processing arrangement may also be employed to execute the instructions contained in main memory 720. Hard-wired circuitry can be used in place of or in combination with software instructions together with the systems and methods described herein. Systems and methods described herein are not limited to any specific combination of hardware circuitry and software.

Although an example computing system has been described in FIGS. 7A-7C, the subject matter including the operations described in this specification can be implemented in other types of digital electronic circuitry, or in computer software, firmware, or hardware, including the structures disclosed in this specification and their structural equivalents, or in combinations of one or more of them.

The data processing system 100 and/or monitoring devices 152, 236 can be implemented in virtualized computing environments or cloud computing environments. In such implementations, the components, modules, and functionality described above can be executed within virtual machines, containers, or other virtualized compute instances rather than directly on physical hardware. These virtualized implementations can provide similar functionality while offering benefits of virtualization such as resource optimization, rapid scaling, and deployment flexibility.

Virtual machines implementing the data processing system 100 or monitoring devices 152, 236 can execute on one or more hypervisors managed by a virtualization platform. The hypervisor can abstract the underlying physical hardware and provide virtual CPU, memory, storage, and networking resources to each virtual machine instance. Multiple virtual machine instances can operate on the same physical host while maintaining isolation from each other. The virtualization platform can manage resource allocation, virtual machine lifecycle, and migration of virtual machines between physical hosts as needed for load balancing or hardware maintenance.

In containerized implementations, the data processing system 100 or monitoring devices 152, 236 can be deployed as containers running on container orchestration platforms such as Kubernetes. Each container can encapsulate the application code, runtime, system tools, libraries and settings needed to execute the component. Container orchestration platforms can automate the deployment, scaling, and management of containerized applications across clusters of physical or virtual hosts. This approach enables efficient resource utilization while maintaining portability across different infrastructure environments.

Cloud-based implementations can leverage infrastructure-as-a-service (IaaS) or platform-as-a-service (PaaS) offerings from cloud service providers. The data processing system 100 and monitoring devices 152, 236 can be deployed on cloud compute instances, which provide virtualized compute, memory, storage and networking resources on-demand. Cloud providers can offer managed services for container orchestration, load balancing, auto-scaling, and high availability to simplify deployment and operations. Multi-zone or multi-region deployments can improve reliability and reduce latency for geographically distributed environments.

The network interfaces 734 in virtualized or cloud environments can utilize virtual networking constructs such as virtual network interface cards (vNICs), virtual switches, virtual routers, and software-defined networking (SDN) controllers. These virtual networking components can provide connectivity between virtualized instances while supporting network segmentation, traffic management, and security policies. Cloud providers can offer virtual private clouds (VPCs) and virtual private networks (VPNs) to securely connect cloud resources with on-premises infrastructure.

Storage in virtualized environments can be provided through virtual disks, cloud block storage, object storage, or distributed file systems. Virtual disks can be thin-provisioned and support features like snapshots and cloning. Cloud storage services can offer durability through replication across multiple availability zones. Storage can be attached to virtual machines or containers with various performance tiers available to meet different workload requirements. Software-defined storage can provide storage virtualization and management capabilities across heterogeneous storage systems.

Management and monitoring of virtualized implementations can utilize cloud provider APIs, infrastructure-as-code tools, and container orchestration platforms. These tools can automate provisioning, configuration, scaling, and updates of the virtualized components. Monitoring systems can collect metrics, logs, and traces from virtual machines and containers to provide visibility into application performance and health. Cloud-native observability platforms can aggregate and analyze telemetry data across distributed virtual environments.

The foregoing detailed description includes illustrative examples of various aspects and embodiments and provides an overview or framework for understanding the nature and character of the claimed aspects and embodiments. The drawings provide illustration and a further understanding of the various aspects and embodiments and are incorporated in and constitute a part of this specification.

The subject matter and the operations described in this specification can be implemented in digital electronic circuitry, or in computer software, firmware, or hardware, including the structures disclosed in this specification and their structural equivalents, or in combinations of one or more of them. The subject matter described in this specification can be implemented as one or more computer programs, e.g., one or more circuits of computer program instructions, encoded on one or more computer storage media for execution by, or to control the operation of, data processing apparatuses. A computer storage medium can be, or be included in, a computer-readable storage device, a computer-readable storage substrate, a random or serial access memory array or device, or a combination of one or more of them. While a computer storage medium is not a propagated signal, a computer storage medium can be a source or destination of computer program instructions encoded in an artificially generated propagated signal. The computer storage medium can also be, or be included in, one or more separate components or media (e.g., multiple CDs, disks, or other storage devices). The operations described in this specification can be implemented as operations performed by a data processing apparatus on data stored on one or more computer-readable storage devices or received from other sources.

The terms "computing device" or "component" encompass various apparatuses, devices, and machines for processing data, including by way of example a programmable processor, a computer, a system on a chip, or multiple ones, or combinations of the foregoing. The apparatus can include special purpose logic circuitry, e.g., an FPGA (field programmable gate array) or an ASIC (application specific integrated circuit). The apparatus can also include, in addition to hardware, code that creates an execution environment for the computer program in question, e.g., code that constitutes processor firmware, a protocol stack, a database management system, an operating system, a cross-platform runtime environment, a virtual machine, or a combination of one or more of them. The apparatus and execution environment can realize various different computing model infrastructures, such as web services, distributed computing and grid computing infrastructures.

A computer program (also known as a program, software, software application, app, script, or code) can be written in any form of programming language, including compiled or interpreted languages, declarative or procedural languages, and can be deployed in any form, including as a stand-alone program or as a module, component, subroutine, object, or other unit suitable for use in a computing environment. A computer program can correspond to a file in a file system. A computer program can be stored in a portion of a file that holds other programs or data (e.g., one or more scripts stored in a markup language document), in a single file dedicated to the program in question, or in multiple coordinated files (e.g., files that store one or more modules, sub programs, or portions of code). A computer program can be deployed to be executed on one computer or on multiple computers that are located at one site or distributed across multiple sites and interconnected by a communication network.

The processes and logic flows described in this specification can be performed by one or more programmable processors executing one or more computer programs (e.g., components of the data processing system 100) to perform actions by operating on input data and generating output. The processes and logic flows can also be performed by, and apparatuses can also be implemented as, special purpose logic circuitry, e.g., an FPGA (field programmable gate array) or an ASIC (application specific integrated circuit). Devices suitable for storing computer program instructions and data include all forms of non-volatile memory, media and memory devices, including by way of example semiconductor memory devices, e.g., EPROM, EEPROM, and flash memory devices; magnetic disks, e.g., internal hard disks or removable disks; magneto optical disks. The processor and the memory can be supplemented by, or incorporated in, special purpose logic circuitry.

While operations are depicted in the drawings in a particular order, such operations are not required to be performed in the particular order shown or in sequential order, and all illustrated operations are not required to be performed. Actions described herein can be performed in a different order. The separation of various system components does not require separation in all embodiments, and the described program components can be included in a single hardware or software product.

The phraseology and terminology used herein is for the purpose of description and should not be regarded as limiting. Any references to embodiments or elements or acts of the systems and methods herein referred to in the singular may also embrace embodiments including a plurality of these elements, and any references in plural to any implementation or element or act herein may also embrace embodiments including only a single element. Any implementation disclosed herein may be combined with any other implementation or embodiment.

References to "or" may be construed as inclusive so that any terms described using "or" may indicate any of a single, more than one, and all of the described terms. References to at least one of a conjunctive list of terms may be construed as an inclusive OR to indicate any of a single, more than one, and all of the described terms. For example, a reference to "at least one of 'A' and 'B'" can include only 'A', only 'B', as well as both 'A' and 'B'. Such references used in conjunction with "comprising" or other open terminology can include additional items.

The foregoing embodiments are illustrative rather than limiting of the described systems and methods. Scope of the systems and methods described herein is thus indicated by the appended claims, rather than the foregoing description, and changes that come within the meaning and range of equivalency of the claims are embraced therein.

## Claims

1. A method for mapping dynamic endpoints of a containerized workload cluster to maintain service coherency, the method comprising:
receiving, from a containerized workload cluster, metadata for a plurality of applications executed via a plurality of task instances, the metadata comprising:
an identifier for one or more task instances or services of each application; and
an address corresponding to each of the one or more task instances or services of each application;
generating, using the identifier and the address of the metadata, a data map correlating each of the plurality of applications with a unique identification token, the data map comprising an entry for each task instance or service of an application of the plurality of applications; and
transmitting the data map to a monitoring device configured to enrich received packets with unique identification tokens of the endpoints at the application level using the unique identification tokens to assign synthetic internet protocol (IP) addresses for enriched packets comprising an outer packet encapsulating each of a plurality of received packets.

2. The method of claim 1, wherein the monitoring device is further configured to monitor the enriched packets of the application of the plurality of applications.

3. The method of claim 1, wherein:
the identifier for each of the plurality of task instances comprise an IP address;
the identifier for each of the plurality of applications comprise one of a namespace, task instance name, IP address, or unique identifier (UID);
the unique identification token corresponds to a synthetic IP address on a one-to-one basis; and
the enriched packets comprise inner packets having a source IP address of the one or more task instances or services of each application.

4. The method of claim 1, further comprising:
receiving, from an environment including the containerized workload cluster, second metadata from a second containerized workload cluster;
generating, using a second identifier and a second address of the second metadata, a second data map correlating each of the plurality of applications with a second unique identification token; and
transmitting the second data map to the monitoring device, the monitoring device configured to use the unique identification token to assign a second synthetic IP address, the synthetic IP address and the second synthetic IP address each being unique to the environment.

5. The method of claim 1, further comprising:
generating the data map to include a temporal window for a validity of a correspondence between the address and the one or more task instances or services, wherein the temporal window is determined based on the metadata.

6. The method of claim 1, further comprising:
assigning a same synthetic IP address for a plurality of different task instances or services for each of a plurality of non-overlapping temporal windows, wherein:
a quantity of the one or more task instances varies between the non-overlapping temporal windows.

7. The method of claim 1, wherein:
the metadata is received via a first network interface, and the data map is transmitted via a second network interface; and/or
the one or more task instances or services are distributed across a plurality of worker nodes; and/or
the containerized workload cluster is a Kubernetes cluster, and the one or more task instances or services are pods implemented by a worker node.

8. A system for mapping dynamic endpoints of a containerized workload cluster to maintain service coherency comprising:
a data processing system comprising one or more processors coupled with memory, the data processing system configured to:
receive, from a containerized workload cluster, metadata for a plurality of applications executed via a plurality of task instances, the metadata comprising:
a unique identifier (UID) for one or more task instances or services of each application; and
an internet protocol (IP) address corresponding to each of the one or more task instances of each application;
generate, using the UID and the IP address, a data map correlating each of the plurality of applications with a unique identification token, the data map comprising an entry for each task instance or service of an application of the plurality of applications; and
transmit the data map to a monitoring device configured to enrich received packets with unique identification tokens of the endpoints at the application level using the unique identification tokens to assign synthetic IP addresses for enriched packets comprising an outer packet encapsulating each of a plurality of received packets.

9. The system of claim 8, further comprising:
the monitoring device, the monitoring device being further configured to monitor the enriched packets.

10. The system of claim 8, wherein:
the unique identification token corresponds to the synthetic IP address on a one-to-one basis; and
the enriched packets comprise inner packets having original IP addresses of the one or more task instances or services of each application.

11. The system of claim 8, wherein the data processing system is further configured to:
de-conflate a UID of the containerized workload cluster with a same UID of a further containerized workload cluster according to an assignment of separate synthetic IP addresses to the UID of the containerized workload cluster and the same UID of the further containerized workload cluster; and/or
generate the data map to include a temporal window for a validity of a correspondence between the IP address and the application implemented by the one or more task instances or services, wherein the temporal window is determined based on the metadata; and/or
assign a same IP Address as the unique identification token for a plurality of different task instances or services for each of a plurality of non-overlapping temporal windows, wherein a quantity of the one or more task instances or services varies between the non-overlapping temporal windows.

12. The system of claim 8, wherein:
the metadata is received via a first network interface;
the data map is transmitted via a second network interface;
the one or more task instances or services are distributed across a plurality of worker nodes; and
the containerized workload cluster is a Kubernetes cluster.

13. A non-transitory computer readable storage medium comprising instructions stored thereon that, when executed by a processor, cause the processor to:
receive, from a data processing system, a data map correlating each of a plurality of services of an application with a unique identification token;
receive, from a containerized workload cluster, a plurality of packets;
use the unique identification token to assign a synthetic IP address for enriched packets comprising an outer packet encapsulating each of the plurality of the received packets; and
transmit the enriched packets to a device configured to monitor the service of the plurality of services of the application.

14. The non-transitory computer readable storage medium of claim 13, wherein the instructions are configured to cause the processor to:
de-conflate a UID of the containerized workload cluster with a same UID of a further containerized workload cluster according to an assignment of separate synthetic IP addresses to the UID of the containerized workload cluster and the same UID of the further containerized workload cluster; and/or
assign the synthetic IP address based on a temporal window indicated in the data map, the temporal window indicating a validity of a correspondence between the unique identification and the service.

15. The non-transitory computer readable storage medium of claim 13, wherein:
the enriched packets comprise inner packets having original IP addresses of one or more task instances or services of the application of the containerized workload cluster executing the application.
